# EUROPÄISCHE PATENTSCHRIFT

(11) **EP 3 414 161 B1**
(45) Veröffentlichungstag und Bekanntmachung des Hinweises auf die Patenterteilung: **23.07.2025**
(21) Anmeldenummer: 17703759.5
(22) Anmeldetag: 08.02.2017
(51) Int. Cl.: B64D 13/00

(54) **FLUGZEUG UND WARNEINRICHTUNG FÜR EIN "ENGINE OIL SMELL" IN EINER FLUGZEUGKABINE EINES FLUGZEUGES**
AIRCRAFT AND WARNING DEVICE FOR AN "ENGINE OIL SMELL" IN A CABIN OF AN AIRCRAFT
AVION ET DISPOSITIF D'ALARME EN CAS D' « ODEUR D'HUILE DE MOTEUR » DANS UNE CABINE D'UN AVION

(30) Priorität: 09.02.2016 DE 102016201924
(43) Veröffentlichungstag der Anmeldung: 19.12.2018
(73) Patentinhaber: Lufthansa Technik AG, 22335 Hamburg (DE); Deutsche Lutfhansa Aktiengesellschaft, 50933 Köln (DE)
(72) Erfinder: WINTER, Kirsten, 55294 Bodenheim (DE); WITZEMANN, Tarquinio, 22335 Hamburg (DE); NYENHUIS, Robert, 55129 Mainz (DE); KNORR, Werner, 61194 Niddatal (DE); CONRAD, Thorsten, 66271 Kleinblittersdorf (DE); PETER, Jens, 66111 Saarbrücken (DE); MÜLLER, Michael, 54455 Serrig (DE); CHIROKOLAVA, Andrei, 66117 Saarbrücken (DE)
(74) Vertreter: Müller Verweyen
(86) Internationale Anmeldenummer: PCT/EP2017/052732
(87) Internationale Veröffentlichungsnummer: WO 2017/137429

(56) Entgegenhaltungen:
- EP-A1- 1 701 160
- EP-A1- 3 050 801
- EP-A1- 3 297 918
- EP-B1- 3 297 918
- WO-A1-2016/189420
- DE-A1- 102013 114 685
- GB-A- 2 181 847
- US-A1- 2005 188 700
- US-A1- 2005 229 686
- US-B2- 8 938 973

## Beschreibung

Die vorliegende Erfindung betrifft ein Flugzeug mit wenigstens zwei Flugzeugtriebwerken, mit einer Einrichtung zum Abzweigen von Zapfluft von den verschiedenen Flugzeugtriebwerken zur Versorgung einer Klimaanlage einer Flugzeugkabine mit Zuluft, und eine Warneinrichtung für ein "Engine Oil Smell" in einer Flugzeugkabine eines Flugzeuges mit wenigstens zwei Flugzeugtriebwerken, und einer Einrichtung zum Abzweigen von Zapfluft von den verschiedenen Flugzeugtriebwerken zur Versorgung einer Klimaanlage einer Flugzeugkabine mit Zuluft.

Grundsätzlich wird die zum Betrieb der Klimaanlage für den Innenraum von Flugzeugen erforderliche Druckluft aus einer Verdichterstufe eines Flugzeugtriebwerkes abgezweigt, welche auch als Zapfluft oder als Bleed Air bezeichnet wird. Die Leitung zum Abführen der Bleed Air wird dementsprechend auch als Bleed Duct bezeichnet.

Da das Flugzeugtriebwerk notwendigerweise eine Mehrzahl von Lagerungen aufweist, welche mittels eines Schmiermittels, wie z.B. Öl geschmiert werden, kann durch einen technischen Fehler eine Undichtigkeit auftreten und dann geringe Mengen Verunreinigungen in die Zapfluft gelangen und dadurch zu einem unangenehmen "Engine Oil Smell" in der Kabinenluft führen. Da die Zapfluft aus den Verdichterstufen verschiedener Triebwerke abgezweigt und vor dem Zuführen in die Flugzeugkabine zusammengeführt wird, ist eine Identifizierung des verursachenden Triebwerks allein durch die Wahrnehmung des "Engine Oil Smell's" in der Kabine nicht möglich.

Zur Behebung dieses "Engine Oil Smell's" und zur Identifizierung des verursachenden Triebwerks schaltet die Cockpit Crew die einzelnen Zapfluftanschlüsse der Triebwerke in einem ersten Schritt sukzessive ab und nach einer kurzen Zeitspanne wieder zu und prüft, ob der "Engine Oil Smell" in der Kabinenluft noch auftritt. Ist das verursachende Triebwerk identifiziert, wird nachfolgend die Zuführung der Zapfluft von diesem Triebwerk abgeschaltet, und der "Engine Oil Smell" ist behoben. Die subjektive Einschätzung der Nasen der Crew ist in diesem Fall der Sensor dafür, ob ein "Engine Oil Smell" auftritt, und von welchem der Triebwerke der "Engine Oil Smell" verursacht wird. Dieses Suchen der Quelle dauert durchschnittlich ca. 20 Minuten und basiert allein auf dem subjektiven Empfinden der Crew. Ferner erfordert dieses An- und Abschalten der Zapfluftzuführungen notwendigerweise ein zumindest kurzzeitiges weiteres Zuführen der kontaminierten Zapfluft, bis das verursachende Triebwerk identifiziert ist.

Nach einem sogenannten "Engine Oil Smell" im Flug kann eine Überprüfung am Boden mit Handdetektoren vorgenommen werden, wobei die Flugzeugtriebwerke auch dazu einzeln an- und abgeschaltet werden müssen, bis das verursachende Triebwerk identifiziert ist. Ein solcher Run Up ist aufwendig und grundsätzlich zeit-, kosten- und personalintensiv. Dabei kann es vorkommen, dass der "Engine Oil Smell" am Boden nicht auftritt, da die Betriebs- und Umgebungsbedingungen der Triebwerke am Boden und in der Luft gänzlich unterschiedlich sind, so dass eine Identifizierung des den "Engine Oil Smell" verursachenden Triebwerkes am Boden nicht mehr möglich ist.

Aus den Druckschriften GB 2 181 847 A, US 2005/0229686 A1, US 8,938,973 B2 und der EP 1 701 160 A1 sind verschiedene Messverfahren und von außen an das Triebwerk anschließbare Messeinrichtungen bekannt, mit denen eine Kontaminierung der Zapfluft detektiert werden kann, wenn das Flugzeug am Boden ist. Eine Identifizierung des verursachenden Triebwerks im Flug ist damit nicht möglich.

Aus der nachveröffentlichten WO 2016/189420 A1 ist der Einbau von Luftqualitätssensoren in ein Flugzeugbelüftungssystem bekannt, um die Art und Konzentration möglicher Verunreinigungen zu detektieren.

Vor diesem Hintergrund liegt der Erfindung die Aufgabe zugrunde, ein Flugzeug und eine Warneinrichtung bereitzustellen, durch die die Zuverlässigkeit einer "Engine Oil Smell" Detektion verbessert wird.

Zur Lösung der Aufgabe wird ein Flugzeug mit den Merkmalen des Anspruchs 9 und eine Warneinrichtung mit den Merkmalen des Anspruchs 1 vorgeschlagen. Weitere bevorzugte Weiterentwicklungen sind den Unteransprüchen, den Figuren und der zugehörigen Beschreibung zu entnehmen.

Gemäß dem Grundgedanken der Erfindung wird vorgeschlagen, dass wenigstens eine Luftgütesensoreinrichtung vorgesehen ist, welche dazu eingerichtet ist, die Luftgüte der von wenigstens einem der Flugzeugtriebwerke abgezweigten Zapfluft zu überwachen und bei Detektion von Verunreinigungen ein Signal auszusenden, und dass wenigstens eine Anzeigeeinrichtung vorgesehen ist, welche in Abhängigkeit des von der Luftgütesensoreinrichtung ausgesendeten Signals ein Signal zur Anzeige bringt.

Der Begriff Zapfluft umfasst dabei den aus dem Flugzeugtriebwerk abgezapften Luftstrom sowohl strömungsaufwärts als auch strömungsabwärts von der bordeigenen Klimaanlage des Flugzeugs, in welcher die Zapfluft zur Einleitung in die Flugzeugkabine aufbereitet wird. Damit basiert der Erfindungsgedanke auf zwei Schritten, erstens wird die Luftgüte der Zapfluft durch die Luftgütesensoreinrichtung objektiv detektiert, so dass Verunreinigungen in der Zapfluft unabhängig von dem subjektiven Empfindungsvermögen der Crew erkannt werden können. Zweitens wird durch die vorgesehene Anzeigeeinrichtung ein Signal zur Anzeige gebracht, welches eine von der Luftgütesensoreinrichtung detektierte Verunreinigung der Zapfluft objektiv zur Anzeige bringt und die Crew aktiv auf eine Verunreinigung der Zapfluft aufmerksam macht. Sofern der vorgegebene, zur Aussendung des Warnsignals zu überschreitende Grenzwert der Verunreinigung der Zapfluft entsprechend niedrig gewählt ist, kann die Crew auch dann schon auf eine Verunreinigung aufmerksam gemacht werden, wenn die Verunreinigung objektiv durch die Crew noch gar nicht wahrnehmbar ist.

Erfindungsgemäß sind wenigstens zwei Luftgütesensoreinrichtungen vorgesehen, welche die Luftgüte der von den unterschiedlichen Flugzeugtriebwerken abgezweigten Zapfluft getrennt voneinander detektieren, und eine Anzeigeeinrichtung vorgesehen ist, welche in Abhängigkeit von den Signalen der unterschiedlichen Luftgütesensoren ein flugzeugtriebwerksindividualisiertes Signal zur Anzeige bringt.

Durch die vorgeschlagene Weiterentwicklung kann die Luftgüte der von den Triebwerken abgezweigten Zapfluft durch die Luftgütesensoreinrichtungen getrennt voneinander detektiert werden. Da das Signal der Anzeigeeinrichtung ferner ein flugzeugtriebwerksindividualisiertes Signal ist, kann auch ein unmittelbarer Rückschluss auf das verursachende Triebwerk vorgenommen werden, so dass der jeweilige Zapfluftanschluss gesperrt und der "Engine Oil Smell" kurzfristig behoben werden kann. Das flugzeugtriebwerksindividualisierte Signal kann dann protokolliert werden, so dass am Boden anschließend entsprechende Wartungsmaßnahmen vorgenommen werden können, ohne dass dazu eine weiterer Run Up zur Identifizierung des verursachenden Triebwerks erforderlich ist.

Damit ermöglicht die erfindungsgemäße Lösung eine Detektierung einer Verunreinigung der Zapfluft in Echtzeit mit einer gleichzeitigen Identifizierung des Triebwerkes, so dass kurzfristig Maßnahmen zur möglichst zuverlässigen Behebung des "Engine Oil Smell's" ergriffen werden können. Dazu muss der "Engine Oil Smell" in der Flugzeugkabine überhaupt noch nicht aufgetreten sein und damit wahrnehmbar sein, sofern nur eine der Luftgütesensoreinrichtungen ein entsprechendes Signal generiert. Die Luftgütesensoreinrichtungen sind durch die getrennte Detektierung der aus den Flugzeugtriebwerken abgezweigten Zapfluft praktisch den Quellen der Zapfluft zugeordnet und ermöglichen damit eine sehr frühzeitige Warnung, wenn die Zapfluft eines der Flugzeugtriebwerke verunreinigt ist.

Erfindungsgemäß ist eine gemeinsame Auswerteeinheit vorgesehen, der die Signale der Luftgütesensoreinrichtungen zugeführt werden, welche aus den Signalen der Luftgütesensoreinrichtungen das in der Anzeigeeinrichtung zur Anzeige gebrachte Signal erzeugt. Durch die vorgeschlagene Lösung kann eine sehr einfache Systemarchitektur mit den Luftgütesensoreinrichtungen, der Anzeigeeinrichtung und der dazwischen angeordneten, gemeinsamen Auswerteeinheit verwirklicht werden. In der Auswerteeinheit können dann vorbestimmte Grenzwerte mit einem entsprechenden Auswertealgorithmus hinterlegt sein, in dem die Signale der Luftgütesensoreinrichtungen verarbeitet werden, wobei bei Überschreiten der Grenzwerte durch eines der Signale der Luftgütesensoreinrichtungen dann das flugzeugtriebwerksindividualisierte Signal an der Anzeigeeinrichtung zur Anzeige gebracht wird. Alternativ können die Signale der Luftgütesensoreinrichtungen auch nur aufbereitet und direkt an der Anzeigeeinrichtung zur Anzeige gebracht werden, wobei das Überschreiten der vorgegebenen Grenzwerte dann durch eine Veränderung der Darstellung der Messwerte, wie z.B. durch eine farbliche Änderung, signalisiert werden kann. Dabei kann die Auswerteeinheit als einzelnes Bauteil ausgebildet sein, oder auch in die Bordelektronik integriert sein. Sofern die vorgeschlagene Lösung als Nachrüstlösung für bereits fliegende Flugzeuge ausgebildet ist, bietet es sich an, die Auswerteeinheit als separates Bauteil auszubilden, so dass ein Eingriff in die Bordelektronik nicht erforderlich ist.

Ferner kann die Anzeigeeinrichtung auch mehrere jeweils einem Flugzeugtriebwerk oder einer Gruppe von Flugzeugtriebwerken zugeordnete Anzeigefelder oder Anzeigeelemente aufweisen, und das flugzeugtriebwerksindividualisierte Signal durch eine Anzeige eines Signals auf einem der Anzeigefelder oder durch eine Aktivierung eines der Anzeigeelemente verwirklicht sein. Durch die mehreren Anzeigefelder oder Anzeigeelemente kann die Individualisierung des Signals in Bezug zu einem Triebwerk durch die Anzeige eines Signals auf einem dem jeweiligen Flugzeugtriebwerk zugeordneten Anzeigefeld oder durch die Betätigung eines dem Triebwerk zugeordneten Anzeigeelementes vorgenommen werden. Damit kann das verursachende Triebwerk ganz einfach anhand der Tatsache erkannt werden, welches der Anzeigeelemente betätigt wird, oder auf welchem Anzeigefeld ein entsprechendes Signal erzeugt wird.

Die Anzeigeeinrichtung kann in einem Ausführungsbeispiel besonders kostengünstig und gleichzeitig gut erkennbar ausgebildet werden, indem die Anzeigeelemente durch LEDs gebildet sind.

Ferner können die Luftgütesensoreinrichtungen in einem illustrativen Beispiel, das nicht in den Schutzbereich der Ansprüche fällt, durch optische Sensoreinrichtungen gebildet sein, welche wenigstens eine in die Zapfluft strahlende Lichtquelle und wenigstens eine die Reflexion des abgestrahlten Lichts detektierende Photodiode aufweisen. Das von der Lichtquelle abgestrahlte Licht wird für den Fall, dass in der Zapfluft Öl- oder sonstige Verschmutzungspartikel vorhanden sind, von diesen auf die Photodiode reflektiert, welche daraufhin ein Signal generiert. Dabei wird ferner der Vorteil ausgenutzt, dass das Öl fluoreszierende Eigenschaften aufweist, so dass das von der Lichtquelle abgestrahlte und reflektierte Licht durch die fluoreszierenden Eigenschaften zusätzlich verstärkt wird.

Dabei werden der fluoreszierende Effekt und die Verstärkung des reflektierten Lichts durch die Ölpartikel besonders stark intensiviert, wenn die Lichtquelle eine UV-Lichtquelle ist.

Ferner wird vorgeschlagen, dass die Anzeigeeinrichtung in einem Cockpit des Flugzeuges angeordnet ist. Dadurch können die Crew-Mitglieder und insbesondere die in dem Cockpit befindlichen Flugkapitäne möglichst frühzeitig auf das Vorliegen eines "Engine Oil Smell's" hingewiesen werden, so dass sie möglichst unmittelbar und frühzeitig entsprechende Gegenmaßnahmen einleiten können.

Ferner können die Luftgütesensoreinrichtungen jeweils einen in einer Strömungsleitung der Zapfluft angeordneten Filter aufweisen. Durch den Filter werden die Partikel gesammelt, so dass an diesen auch bereits bei sehr geringen Partikelkonzentrationen in der Zapfluft eine größere Menge an Partikeln anhaftet. Die Sensoren der Luftgütesensoreinrichtungen sind in diesem Fall auf den Filter gerichtet oder mit dem Filter gekoppelt und detektieren die an dem Filter anhaftenden Partikel. Aufgrund dieser vergrößerten Menge an Partikeln an dem Filter können bereits sehr geringe Partikelvolumenkonzentrationen in der Zapfluft detektiert werden. Die Filter können z.B. durch Millipore Membrane Filter gebildet sein.

Ferner können auch Filter strömungsaufwärts vor den Sensoreinrichtungen vorgesehen werden, um die Luftgütesensoreinrichtungen vor einer Beschädigung zu schützen und somit deren Funktionsfähigkeit zu erhalten.

Erfindungsgemäß weisen die Luftgütesensoreinrichtungen einen in einer Strömungsleitung der Zapfluft angeordneten Sensor auf. Die Sensoren werden durch die vorgeschlagene Weiterentwicklung unmittelbar von der Zapfluft umströmt. Sofern der Sensor in dem sogenannten Bleed Duct angeordnet ist, wird der Sensor unmittelbar von der in die Flugzeugkabine eingeleiteten Zapfluft umströmt, so dass das detektierte Signal unverfälscht und unmittelbar die Luftgüte der in die Kabine eingeleiteten Zapfluft repräsentiert. Ferner kann die Strömungsleitung auch eine Zweigleitung des Bleed Ducts sein, in der ein Teil der Zapfluft aus dem Bleed Duct ausgeführt und über den Sensor geleitet wird. Auch in diesem Fall führt eine Verunreinigung der Zapfluft unmittelbar zu einem Signal der Luftgütesensoreinrichtung und zu einem Signal der Anzeigeeinrichtung. Das Vorsehen einer Zweigleitung kann jedoch Vorteile hinsichtlich des konstruktiven Anschlusses der Luftgütesensoreinrichtung bieten.

Ferner kann in diesem Fall wenigstens ein den statischen Druck in der Strömungsleitung der Zapfluft vermindernder Druckminderer vorgesehen sein, welcher in Strömungsrichtung stromaufwärts zu dem Sensor angeordnet ist. Die aus dem Verdichter abgezweigte Zapfluft weist einen höheren statischen Druck auf, welcher durch den Druckminderer bewusst verringert wird, wodurch die auf den Sensor einwirkenden Kräfte verringert werden können.

Weiter kann in der Strömungsleitung der Zapfluft wenigstens eine Düse, vorzugsweise eine Venturidüse, vorgesehen sein, welche in Strömungsrichtung stromaufwärts zu dem Sensor angeordnet ist.

Durch die Düse und den Druckminderer können gleichbleibende Druck- und Strömungsverhältnisse in der an dem Sensor vorbeiströmenden Zapfluft hergestellt werden, wodurch die Messgenauigkeit des Sensors erhöht werden kann. Weiter wird vorgeschlagen, dass eine an eine Strömungsleitung der Zapfluft angeschlossene Zweigleitung vorgesehen ist, und die Luftgütesensoreinrichtungen die Luftgüte der Zapfluft in der jeweiligen Zweigleitung detektieren. Die in der Zweigleitung abgezapfte Zapfluft ist repräsentativ für die aus dem jeweiligen Triebwerk abgezweigte Zapfluft. Dabei kann die Zweigleitung für den Anschluss der Luftgütesensoreinrichtung individuell geformt und ausgelegt werden, oder sie kann auch Teil der Luftgütesensoreinrichtung selbst sein.

Weiter wird vorgeschlagen, dass die Luftgütesensoreinrichtung und die Anzeigeeinrichtung dazu eingerichtet sind, die Luftgüte zu überwachen und das Signal zur Anzeige zu bringen, wenn das Flugzeug am Boden und wenn das Flugzeug in der Luft ist. Durch die vorgeschlagene Lösung können die Signale der Luftgütesensoreinrichtungen über die Anzeigeeinrichtung während des Fluges in Echtzeit zur Anzeige gebracht werden, so dass eine Warnung über ein "Engine Oil Smell" unabhängig von dem subjektiven Empfinden der Crew und auch unabhängig von einer in der Flugzeugkabine wahrnehmbaren Verunreinigung der Kabinenluft unmittelbar angezeigt wird, und zwar unabhängig, ob das Flugzeug am Boden oder in der Luft ist.

Ferner ist es bevorzugt, dass die Luftgütesensoreinrichtung und die Anzeigeeinrichtung dazu eingerichtet sind, die Luftgüte kontinuierlich zu überwachen und das Signal kontinuierlich zur Anzeige zu bringen. Durch die kontinuierliche Überwachung und Anzeige des Signals kann erstens der Zeitpunkt des Auftretens rückwirkend genau bestimmt werden, wodurch das Auffinden der Fehlerquelle in Verbindung mit möglichen Betriebsparametern des Flugzeugtriebwerks vereinfacht vorgenommen werden kann. Zweitens kann auch ein Fehler in der Luftgütesensoreinrichtung oder Anzeigeeinrichtung durch die kontinuierliche Detektierung der Luftgüte und Anzeige des Signals vereinfacht erkannt werden, wenn die Anzeigeeinrichtung z.B. kein Signal mehr anzeigt.

Weiter wird zur Lösung der Aufgabe eine Warneinrichtung für ein "Engine Oil Smell" in einer Flugzeugkabine eines Flugzeuges mit wenigstens zwei Flugzeugtriebwerken, und einer Einrichtung zum Abzweigen von Zapfluft von den verschiedenen Flugzeugtriebwerken zur Versorgung einer Klimaanlage einer Flugzeugkabine mit Zuluft vorgeschlagen, wobei wenigstens zwei Luftgütesensoreinrichtungen vorgesehen sind, welche die Luftgüte der von den unterschiedlichen Flugzeugtriebwerken abgezweigten Zapfluft getrennt voneinander detektieren, und eine Anzeigeeinrichtung vorgesehen ist, welche in Abhängigkeit von den Signalen der unterschiedlichen Luftgütesensoren ein flugzeugtriebwerksindividualisiertes Signal zur Anzeige bringt.

Die Flugzeugkabine umfasst dabei sowohl das Flugzeugcockpit und die Passagierkabine, bzw. ggf. Crewräume und Frachtraum.

Die vorgeschlagene Warneinrichtung kann als Nachrüstlösung in einem fertigen Flugzeug eingebaut werden, wobei die zu erzielenden Vorteile die vergleichsweise geringen Kosten der Luftgütesensoreinrichtungen und der Anzeigeeinrichtung in jedem Fall rechtfertigen. Ferner kann die Warneinrichtung auch bereits bei der Planung von Beginn der Flugzeugentwicklung in ein Flugzeugsystem integriert werden, wobei die Warneinrichtung auch zusätzlich mit anderen Systemen des Flugzeugs zusammenwirken kann.

Die Erfindung wird im Folgenden anhand bevorzugter Ausführungsformen unter Bezugnahme auf die beigefügten Figuren erläutert. Dabei zeigt
- Fig. 1:: ein Flugzeug mit einem Leitungssystem zur Zuführung von Zapfluft aus den Flugzeugtriebwerken in die Flugzeugkabine; und
- Fig. 2:: ein vergrößertes Flugzeugtriebwerk mit einem Leitungssystem zur Entnahme von Zapfluft; und
- Fig. 3:: eine Luftgütesensoreinrichtung mit einem optischen Sensor in einem illustrativen Beispiel, in den Schutzbereich der Ansprüche fällt; und das nicht
- Fig. 4:: eine Luftgütesensoreinrichtung mit einem optischen Sensor in einem weiteren illustrativen Beispiel, das nicht in den Schutzbereich der Ansprüche fällt; und
- Fig. 5:: ein Leitungssystem mit einer Zweigleitung und einem Sichtkontrollfenster, das nicht in den Schutzbereich der Ansprüche fällt; und
- Fig. 6:: ein Flugzeug mit einer erfindungsgemäßen Warneinrichtung in schematischer Darstellung; und
- Fig. 7:: eine Anzeigeeinrichtung einer erfindungsgemäßen Warneinrichtung, und
- Fig. 8:: eine Luftgütesensoreinrichtung, wobei der Sensor durch einen Metalloxydsensor gebildet ist.

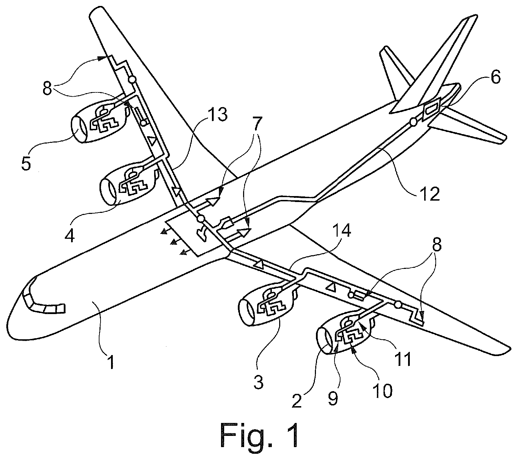

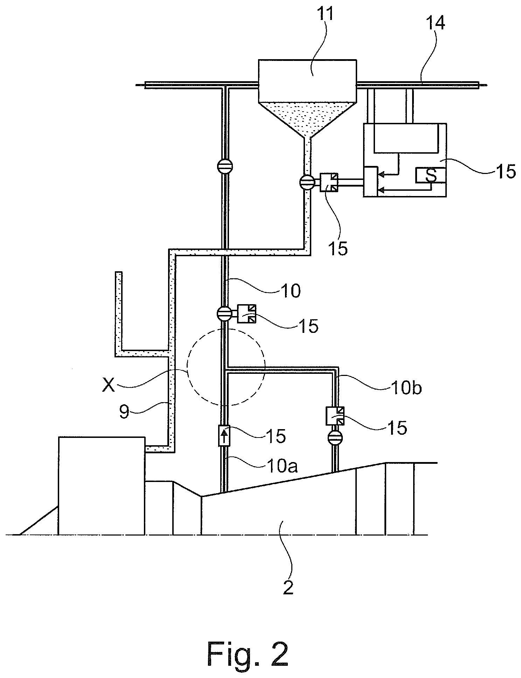

In der Figur 1 ist ein Flugzeug 1 mit fünf als Strahltriebwerke ausgebildeten Flugzeugtriebwerken 2, 3, 4, 5 und 6 zu erkennen, wobei das im Bereich des hinteren Höhenleitwerks angeordnete Flugzeugtriebwerk 6 nur eine sogenannte Auxiliary Power Unit (APU) ist, welche im Wesentlichen am Boden zur Speisung verschiedener Aggregate, wie auch der Klimaanlage, mit Luft und Energie dient. In der Figur 2 ist ein Flugzeugtriebwerk 2 mit einer Entnahme der Zapfluft in vergrößerter Darstellung zu erkennen.

Aus den Verdichterstufen der Flugzeugtriebwerke 2, 3, 4, 5 und 6 wird über Strömungsleitungen 9 und 10 jeweils Zapfluft entnommen und über Strömungsleitungen 12, 13 und 14 zusammengeführt und über Abzweigungen 7 einer Klimaanlage für die Flugzeugkabine zugeführt. Die Strömungsleitungen 9 und 10 sind nur in dem Flugzeugtriebwerk 2 mit Bezugszeichen versehen, aber selbstverständlich auch bei den Flugzeugtriebwerken 3, 4, 5 und 6 vorgesehen.

Die Zapfluft wird über eine Strömungsleitung 9 von dem Fan des Flugzeugtriebwerks 2 und über ein Paar von Strömungsleitungen 10a und 10b aus einer Verdichterstufe des Flugzeugtriebwerks 2 entnommen. Dabei wird die Zapfluft über die Strömungsleitung 10a aus der 5. Stufe des Niederdruckabschnitts und über die Strömungsleitung 10b aus der 9. Stufe des Hochdruckabschnitts des Verdichters abgezweigt. Die Teilströme der Zapfluft werden dann in der Strömungsleitung 10 wieder zusammengeführt und schließlich einem Vorkühler 11 zugeführt, dem auch die Zapfluft aus der Strömungsleitung 9 des Fan's zugeführt wird. Anschließend wird die Zapfluft nach dem Austreten aus dem Vorkühler 11 durch die Strömungsleitung 14 in die Klimaanlage der Flugzeugkabine zugeführt. Die Zuführung der Zapfluft durch die Strömungsleitungen 9, 10a, 10b und 10 kann durch eine Mehrzahl von Ventilen und zugehörigen Steuereinrichtungen 15 zugeschaltet, abgeschaltet oder auch volumenmäßig geregelt werden. Soweit entspricht das Flugzeug 1 dem Stand der Technik.

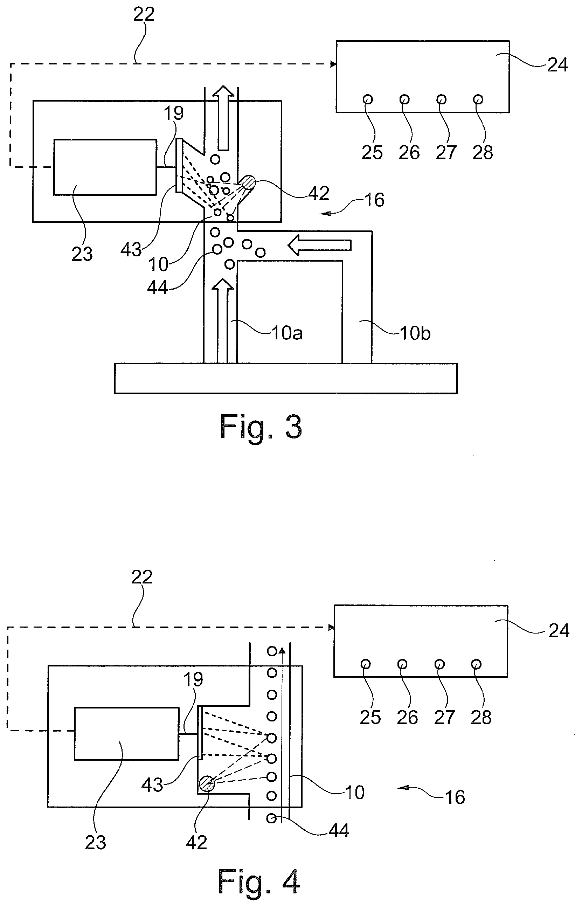

In den Figuren 3, 4 und 5 ist die Einzelheit X der Figur 2 vergrößert in verschiedenen Ausführungsformen zu erkennen. Die über die Strömungsleitungen 10a und 10b aus der Verdichterstufe abgezweigte Zapfluft wird in der Strömungsleitung 10 zusammengeführt, in der in den Ausführungsbeispielen der Figuren 3 und 4 jeweils eine Luftgütesensoreinrichtung 16 vorgesehen ist. Je nach der Positionierung der Luftgütesensoreinrichtung 16 in den Strömungsleitungen 9, 10, 12, 13 oder 14 kann diese die von dem Fan oder der Verdichterstufe abgezweigte Zapfluft getrennt, oder auch die aus einem einzigen Flugzeugtriebwerk 2, 3, 4, 5, 6 oder auch die aus einer Gruppe von z.B. zwei Flugzeugtriebwerken 2, 3, 4, 5 oder 6 abgezweigte Zapfluft nach dem Zusammenführen detektieren.

In dem illustrativen Beispiel der Figur 3, das nicht in den Schutzbereich der Ansprüche fällt, ist die Luftgütesensoreinrichtung 16 durch eine optische Sensoreinrichtung gebildet und umfasst eine Lichtquelle 42 und eine Photodiode als Sensor 43, welcher mit einer Auswerteeinheit 23 verbunden ist. Die Lichtquelle 42 strahlt in die Strömungsleitung 10 in die Zapfluft hinein. Sofern in der Zapfluft Engine Oil 44 vorhanden ist, wird das von der Lichtquelle 42 abgestrahlte Licht von dem Engine Oil 44 auf die Photodiode reflektiert, welche daraufhin ein Signal generiert. Die Lichtquelle 42 und der Sensor 43 sind auf unterschiedlichen Seiten der Strömungsleitung 10 angeordnet. In dem illustrativen Beispiel der Figur 4, das nicht in den Schutzbereich der Ansprüche fällt, ist eine nach demselben Messprinzip arbeitende Luftgütesensoreinrichtung 16 zu erkennen, bei der die Lichtquelle 42 und der Sensor 43 auf derselben Seite der Strömungsleitung 10 angeordnet sind. In beiden Luftgütesensoreinrichtungen 16 ist der Sensor 43 jeweils so positioniert, dass das von der Lichtquelle 42 abgestrahlte Licht 42 nur durch eine Reflexion an dem Engine Oil 44 auf den Sensor 43 treffen kann, so dass der Sensor 43 für den Fall, dass kein Engine Oil 44 in der Zapfluft vorhanden ist, kein Signal liefert.

Der Sensor 43 ist über eine Signalleitung 19 mit der Auswerteeinheit 23 signaltechnisch verbunden, welche ihrerseits wiederum über eine Signalleitung 22 mit einer Anzeigeeinrichtung 24 verbunden ist. Auf der Anzeigeeinrichtung 24 sind vier Anzeigeelemente 25, 26, 27, 28 in Form von Leuchtdioden (LED) vorgesehen. Jede der Leuchtdioden ist jeweils einem Flugzeugtriebwerk 2, 3, 4, 5 zugeordnet, was durch die Markierungen Eng1, Eng2, Eng3 und Eng4 kenntlich gemacht ist.

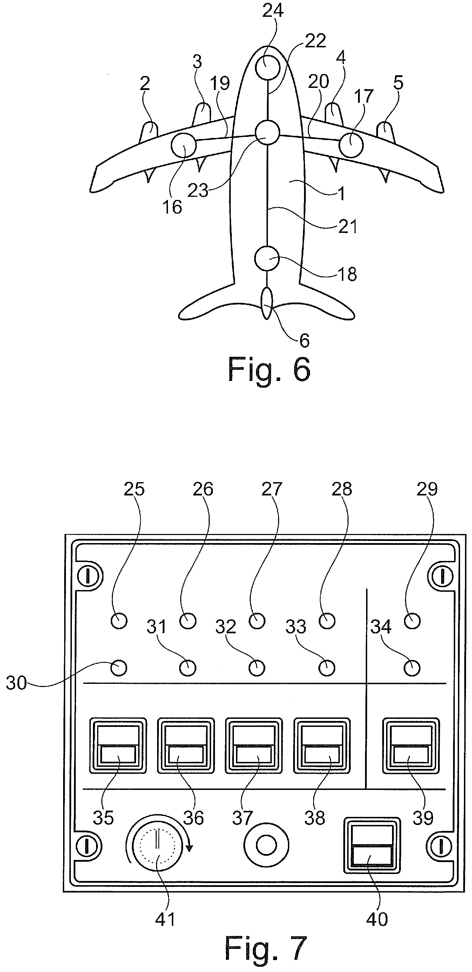

Wie in der Figur 6 zu erkennen ist, sind in dem Flugzeug 1 weitere Luftgütesensoreinrichtungen 17 und 18 vorgesehen. Die Luftgütesensoreinrichtungen 16 und 17 sind hier den in der Figur 1 mit den Bezugszeichen 13 und 14 versehenen Strömungsleitungen zugeordnet, in denen die Zapfluft von den beiden benachbarten Flugzeugtriebwerken 2 und 3 bzw. 4 und 5 nach einem Zusammenführen den Anschlüssen 7 der Klimaanlage zugeführt wird. Es können jedoch zusätzliche Luftgütesensoreinrichtungen vorgesehen werden, so dass die von den Flugzeugtriebwerken 2, 3, 4 und 5 abgezweigte Zapfluft getrennt detektiert wird. Sofern jedem der Flugzeugtriebwerke 2, 3, 4 und 5 eine Luftgütesensoreinrichtung zugeordnet ist, kann das verursachende Flugzeugtriebwerk 2, 3, 4 oder 5 beim Auftreten eines "Engine Oil Smell's" direkt identifiziert werden. Bei einer Zuordnung der Luftgütesensoreinrichtungen 16 und 17 zu jeweils einer Strömungsleitung 13 und 14, in der die Zapfluft von zwei Flugzeugtriebwerken 2 und 3 oder 4 und 5 der Klimaanlage zugeführt wird, wäre nur eine Identifizierung des den "Engine Oil Smell" verursachenden Paares von zwei Flugzeugtriebwerken 2, 3 oder 4, 5 möglich. Ferner ist eine dritte Luftgütesensoreinrichtung 18 vorgesehen, welche ebenfalls über eine Signalleitung 21 mit der Auswerteeinheit 23 verbunden ist. Die dritte Luftgütesensoreinrichtung ist hier einem zusätzlichen Flugzeugtriebwerk 6 zugeordnet, welches als Hilfstriebwerk (Auxiliary Power Unit APU) nur dann verwendet wird, wenn das Flugzeug 1 am Boden ist, und zusätzliche Verbraucher, wie z.B. auch die Klimaanlage, mit Energie oder Zapfluft versorgt werden müssen.

Die Signale der Luftgütesensoreinrichtungen 16, 17 und 18 werden in der Auswerteeinheit 23 verarbeitet und dort mit gespeicherten Grenzwerten verglichen. Werden die vorbestimmten Grenzwerte überschritten, so wird ein entsprechendes Warnsignal über die Signalleitung 22 an die Anzeigeeinrichtung 24 gesendet, welche in der Figur 7 dargestellt ist. Die in der Figur 7 zu erkennende Anzeigeeinrichtung 24 umfasst neben den Anzeigeelementen 25 bis 28 zusätzliche Anzeigeelemente 29 bis 34, welche durch Leuchtdioden gebildet sind und anhand der Markierungen den einzelnen Flugzeugtriebwerken 2, 3, 4, 5 und 6 und einer Verunreinigung der Zapfluft entweder mit Engine Oil (OIL) oder durch andere mögliche Verunreinigungen, wie z.B. Enteisungsflüssigkeit oder Hydraulikflüssigkeit (OTHER), zugeordnet sind. Werden nun durch eine oder mehrere der Luftgütesensoreinrichtungen 16, 17 oder 18 Engine Oil 44 oder andere Verunreinigungen in der Zapfluft detektiert, so wird über die Auswerteeinheit 23 ein entsprechendes Signal erzeugt und entsprechend eine oder mehrere der Leuchtdioden auf der Anzeigeeinrichtung 24 zum Leuchten gebracht. Durch die Auswahl, welche der Leuchtdioden auf der Anzeigeeinrichtung 24 aufleuchtet, wird ein flugzeugtriebwerksindividualisiertes Signal erzeugt, welches der Crew unmittelbar und objektiv anzeigt, dass ein "Engine Oil Smell" oder eine andere Verunreinigung der Zapfluft vorliegt. Zweitens wird durch die Auswahl der zum Leuchten gebrachten Leuchtdiode angezeigt, welches der Flugzeugtriebwerke 2, 3, 4, 5 oder 6 den "Engine Oil Smell" oder die Verunreinigung durch andere Stoffe verursacht, so dass die aus dem jeweiligen Flugzeugtriebwerk 2, 3, 4, 5 oder 6 entnommene Zapfluft durch Betätigung der jeweiligen Ventile 15 abgeschaltet werden kann, und der "Engine Oil Smell" bzw. die Verunreinigung der Kabinenluft im Fluge, aktiv und unmittelbar behoben werden kann. Sofern die Grenzwerte entsprechend niedrig gesetzt werden, könnte die Abschaltung der jeweiligen Zapfluft sogar vorgenommen werden, bevor der "Engine Oil Smell" überhaupt in der Flugzeugkabine wahrnehmbar ist. Zur Abschaltung der jeweiligen Zapfluft sind an der Anzeigeeinrichtung 24 zusätzliche, den Flugzeugtriebwerken 2, 3, 4, 5 und 6 zugeordnete Schalter oder Sensorflächen 35 bis 39 vorgesehen. Die Anzeigeeinrichtung 24 dient damit neben der reinen Anzeige des Warnsignals auch als Betätigungseinrichtung und bildet damit ein Multifunktionsgerät zur Überwachung und Steuerung der Zapfluft in dem Flugzeug 1. Ferner sind an der Anzeigeeinrichtung 24 ein Ein-Ausschalter 40 und ein Drehregler 41 zur Regelung der Helligkeit der Leuchtdioden vorgesehen.

In den beschriebenen illustrativen Beispielen, die nicht in den Schutzbereich der Ansprüche fallen, sind die Luftgütesensoreinrichtungen 16, 17 und 18 als optische Sensoreinrichtungen ausgebildet, was insofern von Vorteil ist, da die bei einem "Engine Oil Smell" in der Zapfluft vorhandenen Ölpartikel 44 fluoreszierende Eigenschaften haben und dadurch das auf die Sensoren 43 reflektierte Licht und das Signal der Sensoren 43 verstärken. Dieser fluoreszierende Effekt kann besonders verstärkt werden, wenn als Lichtquelle 42 eine UV-Lichtquelle (Schwarzlichtquelle) verwendet wird.

Erfindungsgemässe Sensoren 43 können bevorzugt als Halbleitergassensoren (Metalloxydhalbleiter MOS) als statische oder dynamische (temperaturmodeliert) ausgebildet sein. In alternativen Beispielen, die nicht unter den Schutzbereich der Ansprüche fallen, kann auch ein Sensor 43 der folgenden Art verwendet werden:
Infrarotsensor (IR Sensor)
Photoionisationsdetektor (PID-Sensor)
elektro-chemische Zelle (NC-Sensor)
Kohlenstoffdioxid-Sensor (CO2)
Kohlenmonoxid-Sensor (CO)
Nicht dispersiver Infrarotsensor (NDIR)
Photoakustische Spektroskopie (PAS)
Wärmeleitfähigkeitssensor (TCD)
Pellistor (PEL)
Feld-Effekt-Transistor (FET)
Flammionisationsdetektor (FID)
Tunable Laser Diode Spectroscopy (TLDS)
TLDS mit Cavity-Ring-Down (CRDS)
TLDS mit Photoakustik-detektor (PAS)
Fourier-Transformation-IR-Spektrometer (FTIR)
Partikelsensor
Condensation Particle Counter (CPC)
Faraday Cup Electrometer (FCE)
Hygroscopic Tandem Differential Mobility Analyzer (HTDMA)
Optical Particle Counter (OPC)
Scanning Mobility Particle Sizer (SMPS)
Single Particle Soot Photometer (SMSP)
Sensorarray
Quarzkristall-Mikrowaage
Nutzung von Oberflächenwellen.

Ferner ist in anderen alternativen Beispielen, die nicht unter den Schutzumfang der Ansprüche fallen, die Verwendung folgender Messgeräte und Messverfahren als Luftgütesensoreinrichtung zur Detektierung der Zapfluft bzw. der Kabinen- oder Cockpitluft denkbar:
Massenspektrometer (MS)
Ionen Massenspektrometer (IMS)
Laser Ionen Massenspektrometer (LIMS)
Gaschromatograph (GC)

Der Vorteil dieser Messgeräte ist insbesondere darin zu sehen, dass damit die genaue Zusammensetzung der Luft detektiert werden kann.

Ferner wurde die Anzeigeeinrichtung 24 mit den Anzeigeelementen 25 bis 34 zur Wiedergabe des flugzeugtriebwerksindividualisierten Signals beschrieben. Die Anzeigeeinrichtung 24 kann aber auch als Display mit mehreren Anzeigefeldern oder Anzeigeflächen ausgebildet sein. Dabei kann das flugzeugtriebwerksindividualisierte Signal z.B. in der Wiedergabe eines speziellen Symbols, z.B. in Form eines symbolisierten Flugzeugs, gebildet sein, wobei die Information über das Auftreten eines "Engine Oil Smell's" dann durch entsprechend an dem Flugzeug 1 positionierte Warnlampen gebildet ist. Ferner kann das flugzeugtriebwerksindividualisierte Signal auch einfach durch eine auf dem Display wiedergegebene Wortfolge mit einem entsprechenden Inhalt gebildet sein, wie z.B.: "Engine Oil Detected - ENG1".

Die Anzeigeeinrichtung 24 ist vorzugsweise derart positioniert, dass sie jederzeit ablesbar ist. Dabei ist ein Platz zu bevorzugen, den die Crew möglichst häufig sieht, wie z.B. im Bereich des Blickfeldes der Cockpit Crew oder des Kapitäns und des Co-Piloten.

Ferner können die detektierten Daten und insbesondere auch die Identifikation des verursachenden Flugzeugtriebwerks 2, 3, 4, 5 oder 6 auch in einer Speichereinheit der Anzeigeeinrichtung 24 oder der Auswerteeinheit 23 über einen längeren Zeitraum gespeichert werden, so dass die entsprechenden Wartungsmaßnahmen anschließend am Boden ohne einen weiteren Run Up vorgenommen werden können.

Die Luftgütesensoreinrichtungen 16, 17 und 18 können vorzugsweise in einem Gehäuse montiert werden. In den Luftgütesensoreinrichtungen 16, 17 und 18 können dabei Zweigleitungen 45 vorgesehen sein, welche an die Strömungsleitungen 9, 10, 12, 13 oder 14 anschließbar oder angeschlossen sind, so dass die Montage der nachrüstbaren Warneinrichtungen lediglich entsprechende Anschlüsse an den Strömungsleitungen 9, 10, 12, 13, 14 und einen entsprechenden ausreichenden Bauraum voraussetzt. Ferner müssen die Auswerteeinheit 23 und die Anzeigeeinrichtung 24 vorgesehen werden, welche aber auch als bauliche Einheit zusammengefasst werden können. Schließlich müssen die Luftgütesensoreinrichtungen 16, 17 und 18, die Auswerteeinheit 23 und die Anzeigeeinrichtung 24 nur über entsprechende Signalleitungen 19, 20, 21, 22 signaltechnisch miteinander verbunden werden. Der Aufwand zum Nachrüsten existierender Flugzeuge ist damit vergleichsweise gering.

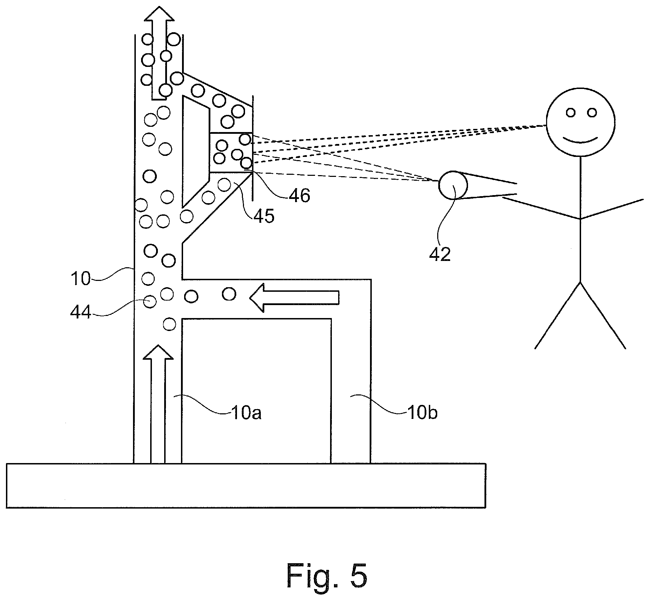

In der Figur 5 ist ein illustratives Beispiel, welches nicht in den Schutzbereich der Ansprüche fällt, mit einer vereinfachten Kontrollmöglichkeit zur Detektierung von "Engine Oil Smell" zu erkennen, bei der eine Zweigleitung 45 an die Strömungsleitung 10 angeschlossen ist. In der Zweigleitung ist ein transparentes Sichtkontrollfenster 46 vorgesehen. Das verursachende Flugzeugtriebwerk 2, 3, 4, 5 oder 6 kann in diesem Fall sehr einfach detektiert werden, indem das Wartungspersonal am Boden mit einer Lichtquelle 42 durch das Sichtkontrollfenster 46 leuchtet. Für den Fall, dass in der Zapfluft Ölpartikel 44 vorhanden sind, wird das Licht reflektiert und durch die fluoreszierenden Eigenschaften der Ölpartikel 44 verstärkt. Die Ölpartikel 44 beginnen dann zu leuchten, was von dem Wartungspersonal visuell wahrgenommen werden kann.

Diese sehr einfache Lösung setzt einzig und allein eine zugängliche Zweigleitung 45 voraus.

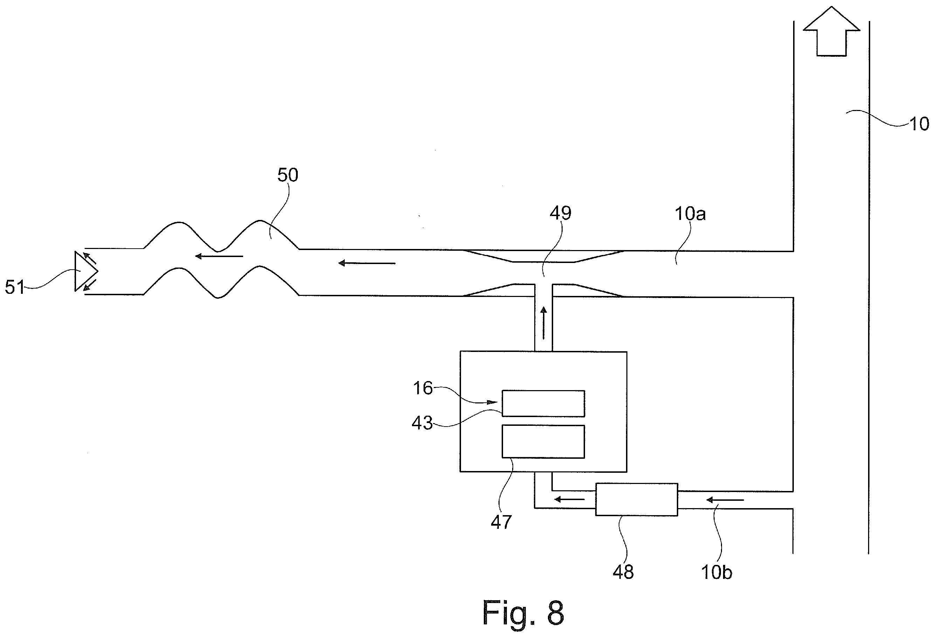

In der Figur 8 ist eine Lösung zu erkennen, in der der Sensor 43 durch einen Metalloxydsensor gebildet ist, wobei bevorzugt ein temperaturmodellierter Halbleitersensor zur Anwendung gelangt. Die Vorteile eines solchen Sensors 43 sind darin zu sehen, dass mit einem einzigen Sensor 43 eine alterungsfreie und driftfreie Detektierung der Gase und Dämpfe in der Zapfluft möglich ist. Der hochempfindliche Sensor steht mit seiner sensitiven Halbleiterschicht aus Metalloxyd mit der abgezweigten Zapfluft in Berührung. Die Messgröße ist dabei der elektrische Widerstand, der sich auf der Basis der ablaufenden Reaktionen auf der Sensoroberfläche entweder verringert oder erhöht, wobei der Sensor bei konstanter oder vorzugsweise auch bei modulierter Temperatur betrieben werden kann.

Es können dabei mehrere Sensoren 43 ein und derselben oder auch unterschiedlicher Art verwendet werden, welche durch ihre Auslegung zur Detektierung der Zapfluft in unterschiedlichen Messbereichen, wie z.B. Temperatur- und Druckbereichen, vorgesehen sind. Alternativ können aber auch verschiedene Sensoren 43 unterschiedlicher Art verwendet werden, sofern z.B. verschiedene Bestandteile in der Zapfluft detektiert werden sollen. Durch die Kombination von Sensoren 43 unterschiedlicher oder gleicher Art kann der Messbereich, die Empfindlichkeit und schließlich auch die Genauigkeit der Luftgütesensoreinrichtung 16 verbessert werden.

In Strömungsrichtung der in der Strömungsleitung 10b aus der Strömungsleitung 10 abgezweigten Zapfluft ist zunächst ein Filter 48 vorgesehen, welcher die abgezweigte Zapfluft filtert und dadurch die stromabwärts angeordnete Luftgütesensoreinrichtung 16 zusätzlich schützt. Die Luftgütesensoreinrichtung 16 umfasst neben dem eigentlichen Sensor 43 zusätzlich eine in Bezug zu der Strömungsrichtung der abgezweigten Zapfluft stromaufwärts angeordnete kritische Düse 47, in der die Strömungsverhältnisse in der abgezweigten Zapfluft auf für den Sensor 43 passende oder auch optimale Verhältnisse eingestellt werden.

Ferner ist eine zweite, an die Strömungsleitung 10 angeschlossene Strömungsleitung 10a vorgesehen, in der ebenfalls eine geringe Menge der Zapfluft aus der Strömungsleitung 10 abgezweigt wird. In der Strömungsleitung 10b ist eine Venturidüse 49 vorgesehen, an welche die Strömungsleitung 10b im Bereich des kleineren Querschnitts angeschlossen ist. In der Venturidüse 49 wird die abgezweigte Zapfluft beschleunigt und der statische Druck in der Zapfluft gesenkt, wodurch die Zapfluft aus der Strömungsleitung 10b angesaugt wird. Die Strömungsleitung 10a bildet mit der Venturidüse 49 praktisch eine Ansaugvorrichtung zur Erzeugung einer treibenden Druckdifferenz in der Strömungsleitung 10b zwischen dem Eingang und dem Ausgang. Die geringe Menge der abgezweigten Zapfluft wird dann in der Strömungsleitung 10 nach dem Durchströmen der Venturidüse weiter durch eine Kühlstrecke 50 geleitet und schließlich nach der Abkühlung durch eine Streudüse 51 in die Umgebung freigesetzt. Die Venturidüse 49 wirkt hier als Druckminderer, welcher den statischen Druck in der abgezweigten Zapfluft an einer strömungsaufwärts zu der Luftgütesensoreinrichtung 16 angeordneten Stelle senkt, so dass die Zapfluft praktisch durch die Luftgütesensoreinrichtung 16 gezogen wird.

## Patentansprüche

1. Warneinrichtung zum Detektieren von "Engine Oil Smell" in einer Flugzeugkabine eines Flugzeuges (1), wobei das Flugzeug (1) mit wenigstens zwei Flugzeugtriebwerken (2,3,4,5,6), und mit
- einer Einrichtung zum Abzweigen von Zapfluft von den verschiedenen Flugzeugtriebwerken (2,3,4,5,6) zur Versorgung einer Klimaanlage einer Flugzeugkabine mit Zuluft ausgestattet ist, wobei
- wenigstens zwei Luftgütesensoreinrichtungen (16,17,18) vorgesehen sind, welche dazu eingerichtet sind, die Luftgüte der von den unterschiedlichen Flugzeugtriebwerken (2,3,4,5,6) abgezweigten Zapfluft zu überwachen und getrennt voneinander zu detektieren und bei Detektion von Verunreinigungen ein Signal auszusenden, und wobei
- wenigstens eine Anzeigeeinrichtung (24) vorgesehen ist, welche dazu eingerichtet ist, in Abhängigkeit von den Signalen der unterschiedlichen Luftgütesensoreinrichtungen (16,17,18) ein flugzeugtriebwerksindividualisiertes Signal zur Anzeige zu bringen,
**dadurch gekennzeichnet, dass**
- eine gemeinsame Auswerteeinheit (23) vorgesehen ist, der die Signale der Luftgütesensoreinrichtungen (16,17,18) zugeführt werden, welche dazu eingerichtet ist, aus den Signalen der Luftgütesensoreinrichtungen (16,17,18) das in der Anzeigeeinrichtung (24) zur Anzeige gebrachte Signal zu erzeugen, wobei
- die Luftgütesensoreinrichtungen (16,17,18) in einem eingebauten Zustand, in dem die Warneinrichtung in einem Flugzeug eingebaut ist, einen in einer Strömungsleitung (9,10) der Zapfluft angeordneten Sensor (43) aufweisen, wobei
- der Sensor (43) durch wenigstens einen Metalloxydsensor gebildet ist.

2. Warneinrichtung nach Anspruch 1, **dadurch gekennzeichnet, dass**
- die Anzeigeeinrichtung (24) mehrere jeweils einem Flugzeugtriebwerk (2,3,4,5,6) oder einer Gruppe von Flugzeugtriebwerken (2,3,4,5,6) zugeordnete Anzeigefelder oder Anzeigeelemente (25 bis 34) aufweist, und
- das flugzeugtriebwerksindividualisierte Signal durch eine Anzeige eines Signals auf einem der Anzeigefelder oder durch eine Aktivierung eines der Anzeigeelemente (25 bis 34) verwirklicht ist.

3. Warneinrichtung nach Anspruch 2, **dadurch gekennzeichnet, dass**
- die Anzeigeelemente (25 bis 34) durch LEDs gebildet sind.

4. Warneinrichtung nach einem der Ansprüche 1 bis 3, **dadurch gekennzeichnet, dass**
- die Anzeigeeinrichtung (24) in einem Cockpit des Flugzeuges (1) angeordnet ist.

5. Warneinrichtung nach einem der vorangehenden Ansprüche, **dadurch gekennzeichnet, dass**
- wenigstens ein den statischen Druck in der Strömungsleitung (9,10) der Zapfluft vermindernder Druckminderer vorgesehen ist, welcher im eingebauten Zustand, in dem die Warneinrichtung in einem Flugzeug eingebaut ist, in Strömungsrichtung stromaufwärts zu dem Sensor (43) angeordnet ist.

6. Warneinrichtung nach einem der vorangehenden Ansprüche, **dadurch gekennzeichnet, dass**
- in der Strömungsleitung (9,10) der Zapfluft wenigstens eine Düse, vorzugsweise eine Venturidüse, vorgesehen ist, welche im eingebauten Zustand, in dem die Warneinrichtung in einem Flugzeug eingebaut ist, in Strömungsrichtung stromaufwärts zu dem Sensor (43) angeordnet ist.

7. Warneinrichtung nach einem der Ansprüche 1 bis 6, **dadurch gekennzeichnet, dass**
- die Luftgütesensoreinrichtung (16,17,18) und die Anzeigeeinrichtung (24) dazu eingerichtet sind, die Luftgüte zu überwachen und das Signal zur Anzeige zu bringen, wenn das Flugzeug (1) am Boden und wenn das Flugzeug (1) in der Luft ist.

8. Warneinrichtung nach einem der Ansprüche 1 bis 7, **dadurch gekennzeichnet, dass**
- die Luftgütesensoreinrichtung (16,17,18) und die Anzeigeeinrichtung (24) dazu eingerichtet sind, die Luftgüte kontinuierlich zu überwachen und das Signal kontinuierlich zur Anzeige zu bringen.

9. Flugzeug (1) mit wenigstens zwei Flugzeugtriebwerken (2,3,4,5,6), und einer Einrichtung zum Abzweigen von Zapfluft von den verschiedenen Flugzeugtriebwerken (2,3,4,5,6) zur Versorgung einer Klimaanlage einer Flugzeugkabine mit Zuluft,
**dadurch gekennzeichnet, dass**
- eine Warneinrichtung nach einem der Ansprüche 1 bis 8 vorgesehen ist.

10. Flugzeug (1) nach Anspruch 9, **dadurch gekennzeichnet, dass**
- wenigstens eine an eine Strömungsleitung (9,10) der Zapfluft angeschlossene Zweigleitung (45) vorgesehen ist, und
- die Luftgütesensoreinrichtungen (16,17,18) dazu eingerichtet sind, die Luftgüte der Zapfluft in der jeweiligen Zweigleitung (45) zu detektieren.

## Claims

1. Warning device for detecting "engine oil smell" in an aircraft cabin of an aircraft (1), wherein the aircraft (1) is equipped with at least two aircraft engines (2, 3, 4, 5, 6) and with
- a device for diverting bleed air from the different aircraft engines (2, 3, 4, 5, 6) to supply fresh air to an air conditioning system of an aircraft cabin, wherein
- at least two air quality sensor devices (16, 17, 18) are provided, which are adapted to monitor the air quality of the bleed air diverted from the different aircraft engines (2, 3, 4, 5, 6) and to detect it separately from each other and to emit a signal upon detection of pollutants, and wherein
- at least one display device (24) is provided, which is adapted to display an aircraft engine-specific signal as a function of the signals from the different air quality sensor devices (16, 17, 18),
**characterized in that**
- a common evaluation unit (23) is provided, to which the signals from the air quality sensor devices (16, 17, 18) are fed, which is adapted to generate, from the signals from the air quality sensor devices (16, 17, 18), the signal displayed in the display device (24), wherein
- the air quality sensor devices (16, 17, 18), in an installed state in which the warning device is installed in an aircraft, comprise a sensor (43) arranged in a flow line (9, 10) of the bleed air, wherein
- the sensor (43) is formed by at least one metal oxide sensor.

2. Warning device according to claim 1, **characterized in that**
- the display device (24) comprises a plurality of display fields or display elements (25 to 34) each assigned to an aircraft engine (2, 3, 4, 5, 6) or a group of aircraft engines (2, 3, 4, 5, 6), and
- the aircraft engine-specific signal is produced by displaying a signal on one of the display fields or by activating one of the display elements (25 to 34).

3. Warning device according to claim 2, **characterized in that**
- the display elements (25 to 34) are formed by LEDs.

4. Warning device according to any one of claims 1 to 3,
**characterized in that**
- the display device (24) is arranged in a cockpit of the aircraft (1).

5. Warning device according to any one of the preceding claims, **characterized in that**
- at least one pressure reducer is provided which reduces the static pressure in the flow line (9, 10) of the bleed air and which, when installed in an aircraft, is arranged upstream of the sensor (43) in the direction of flow.

6. Warning device according to any one of the preceding claims, **characterized in that**
- at least one nozzle, preferably a venturi nozzle, is provided in the flow line (9, 10) of the bleed air, which, when installed in an aircraft, is arranged upstream of the sensor (43) in the direction of flow.

7. Warning device according to any one of claims 1 to 6,
**characterized in that**
- the air quality sensor device (16, 17, 18) and the display device (24) are adapted to monitor the air quality and to display the signal when the aircraft (1) is on the ground and when the aircraft (1) is in the air.

8. Warning device according to any one of claims 1 to 7,
**characterized in that**
- the air quality sensor device (16, 17, 18) and the display device (24) are adapted to continuously monitor the air quality and to continuously display the signal.

9. Aircraft (1) with at least two aircraft engines (2, 3, 4, 5, 6) and a device for diverting bleed air from the different aircraft engines (2, 3, 4, 5, 6) to supply fresh air to an air conditioning system of an aircraft cabin,
**characterized in that**
- a warning device according to any one of claims 1 to 8 is provided.

10. Aircraft (1) according to claim 9, **characterized in that**
- at least one branch line (45) connected to a flow line (9, 10) of the bleed air is provided, and
- the air quality sensor devices (16, 17, 18) are adapted to detect the air quality of the bleed air in the respective branch line (45).

## Revendications

1. Dispositif d'alarme pour détecter une "odeur d'huile de moteur" dans une cabine d'avion d'un avion (1), dans lequel l'avion (1) est équipé d'au moins deux moteurs d'avion (2, 3, 4, 5, 6), et
- d'un dispositif pour dévier l'air prélevé des différents moteurs d'avion (2, 3, 4, 5, 6) pour alimenter en air frais un système de climatisation d'une cabine d'avion, dans lequel
- au moins deux dispositifs de détection de qualité de l'air (16, 17, 18) sont prévus, qui sont configurés pour surveiller et pour détecter séparément la qualité d'air de l'air prélevé dévié provenant des différents moteurs d'avion (2, 3, 4, 5, 6) et pour envoyer un signal en cas de détection d'impuretés, et dans lequel
- au moins un dispositif d'affichage (18) est prévu, qui est configuré pour afficher un signal individualisé de moteur d'avion en fonction des signaux des différents dispositifs de détection de qualité de l'air (16, 17, 18),
**caractérisé en ce que**
- une unité d'évaluation commune (23) est prévue, à laquelle les signaux des dispositifs de détection de qualité de l'air (16, 17, 18) sont acheminés et qui est configurée pour générer le signal affiché dans le dispositif d'affichage (24) à partir des signaux des dispositifs de détection de qualité de l'air (16, 17, 18), dans lequel
- les dispositifs de détection de qualité de l'air (16, 17, 18) comportent, à un état monté dans lequel le dispositif d'alarme est installé dans un avion, un capteur (43) agencé dans un conduit d'écoulement (9, 10) de l'air prélevé, dans lequel
- le capteur (43) est formé par au moins un capteur à oxyde métallique.

2. Dispositif d'alarme selon la revendication 1, **caractérisé en ce que**
- le dispositif d'affichage (24) comporte plusieurs tableaux d'affichage ou éléments d'affichage (25 à 34) respectivement associés à un moteur d'avion (2, 3, 4, 5, 6) ou à un groupe de moteurs d'avion (2, 3, 4, 5, 6), et
- le signal individualisé de moteur d'avion est réalisé par un affichage d'un signal sur l'une des tableaux d'affichage ou par une activation d'un des éléments d'affichage (25 à 34).

3. Dispositif d'alarme selon la revendication 2, **caractérisé en ce que**
- les éléments d'affichage (25 à 34) sont formés par des LED.

4. Dispositif d'alarme selon l'une des revendications 1 à 3, **caractérisé en ce que**
- le dispositif d'affichage (24) est agencé dans un cockpit de l'avion (1).

5. Dispositif d'alarme selon l'une des revendications précédentes, **caractérisé en ce que**
- au moins un réducteur de pression qui réduit la pression statique dans le conduit d'écoulement (9,10) de l'air prélevé est prévu, lequel réducteur est agencé, à l'état monté dans lequel le dispositif d'alarme est installé dans un avion, en amont du capteur (43) dans la direction d'écoulement.

6. Dispositif d'alarme selon l'une des revendications précédentes, **caractérisé en ce que**
- dans la conduite d'écoulement (9,10) de l'air prélevé, au moins une buse, de préférence une buse venturi, est prévue, qui est agencée, à l'état monté dans lequel le dispositif d'alarme est installé dans un avion, en amont du capteur (43) dans la direction d'écoulement.

7. Dispositif d'alarme selon l'une des revendications 1 à 6, **caractérisé en ce que**
- le dispositif de détection de qualité de l'air (16, 17, 18) et le dispositif d'affichage (24) sont configurés pour surveiller la qualité de l'air et afficher le signal lorsque l'avion (1) est au sol et lorsque l'avion (1) est en l'air.

8. Dispositif d'alarme selon l'une des revendications 1 à 7, **caractérisé en ce que**
- le dispositif de détection de qualité de l'air (16, 17, 18) et le dispositif d'affichage (24) sont configurés pour surveiller en continu la qualité de l'air et afficher en continu le signal.

9. Avion (1) ayant au moins deux moteurs d'avion (2, 3, 4, 5, 6), et un dispositif pour dévier l'air prélevé provenant des différents moteurs d'avion (2, 3, 4, 5, 6) pour alimenter en air frais un système de climatisation d'une cabine d'avion,
**caractérisé en ce que**
- un dispositif d'alarme selon l'une des revendications 1 à 8 est prévu.

10. Avion (1) selon la revendication 9, **caractérisé en ce que**
- au moins un conduit de dérivation (45) relié à un conduit d'écoulement (9, 10) de l'air prélevé est prévu, et
- les dispositifs de détection de qualité de l'air (16, 17, 18) sont configurés pour détecter la qualité d'air de l'air prélevé dans la ligne de dérivation (45) respective.
